# EUROPÄISCHE PATENTSCHRIFT

(11) **EP 4 117 869 B1**
(45) Veröffentlichungstag und Bekanntmachung des Hinweises auf die Patenterteilung: **12.06.2024**
(21) Anmeldenummer: 21712452.8
(22) Anmeldetag: 11.03.2021
(51) Int. Cl.: B25J 17/02, B25J 9/16, B25J 9/12

(54) **6-ACHS-POSITIONIERSYSTEM MIT ARRETIERENDER KOMPONENTE**
6-AXIS POSITIONING SYSTEM HAVING A LOCKING COMPONENT
SYSTÈME DE POSITIONNEMENT À SIX AXES COMPORTANT UN COMPOSANT DE BLOCAGE

(30) Priorität: 12.03.2020 DE 102020106741
(43) Veröffentlichungstag der Anmeldung: 18.01.2023
(73) Patentinhaber: Physik Instrumente (PI) GmbH & Co. KG, 76228 Karlsruhe (DE)
(72) Erfinder: SANDER, Christian, 76228 Karlsruhe (DE); RUDOLF, Christian, 76307 Karlsbad (DE)
(74) Vertreter: Grünecker Patent- und Rechtsanwälte PartG mbB
(86) Internationale Anmeldenummer: PCT/EP2021/056197
(87) Internationale Veröffentlichungsnummer: WO 2021/180853

(56) Entgegenhaltungen:
- EP-A1- 0 834 383
- US-A- 5 987 726
- US-A1- 2008 294 285
- US-A1- 2016 016 309

## Beschreibung

Die vorliegende Erfindung betrifft ein 6-Achs-Positioniersystem mit einer Basis, einer bewegbaren Einheit und sechs längenveränderlichen Aktoren, deren eines Ende mit der Basis und deren jeweils anderes Ende mit der bewegbaren Einheit verbunden ist, wobei mindestens eine zusätzliche längenveränderliche Komponente vorgesehen ist, deren eines Ende mit der Basis und deren anderes Ende mit der bewegbaren Einheit verbunden ist und dass die zusätzliche Komponente derart ausgestaltet ist, dass mittels dieser eine lösbare Arretierung des 6-Achs-Positioniersystems zumindest in bestimmten Positionen der bewegbaren Einheit möglich ist, wobei die zusätzliche Komponente eine lösbare Feststellbremse aufweist und wobei die zusätzliche Komponente derart ausgestaltet ist, dass diese passiv mittels der Bewegung der sechs angetriebenen Aktoren längenveränderbar ist.

Derartige 6-Achs-Positioniersysteme werden auch als Hexapoden bezeichnet und bieten sechs Freiheitsgrade der Bewegung auf kompaktem Raum. Die bewegbare Einheit besteht in aller Regel aus einer mit dem oberen Ende der Aktoren verbundenen Plattform (bewegbare Einheit), auf der zu positionierende Elemente bzw. Aufbauten angeordnet werden. 6-Achs-Positioniersysteme gibt es in unterschiedlichen Größen und für die unterschiedlichsten Anwendungen. Als Komponenten in industriellen Produktionsprozessen positionieren Hexapoden selbst hohe Lasten mit Submikrometer-Genauigkeit. Für industrielle Anwendungen gibt es Kombinationen aus absolut messenden Positionssensoren, geeigneter Software und Motioncontrollern, mit denen sich auch komplexe Bewegungsprofile komfortabel ausführen lassen. Ein bevorzugter Antrieb der Aktoren sind bürstenlose DC-Motoren mit Bremse. Der Arbeitsraum eines solchen 6-Achs-Positioniersystems hängt sehr stark von der Längenveränderbarkeit (Teleskopierbarkeit) der Aktoren ab. Insbesondere bei Schwerlast-6-Achs-Positioniersystemen werden für die nötige Steifigkeit sehr große Aktoren eingesetzt. Dies geht einher mit erhöhtem Bauraum und erhöhten Kosten.

Ein gattungsgemäßes Positioniersystem ist aus der US 2016/016309 A1 bekannt. Dieses Dokument befasst sich mit einem 6-Achs-Aktuator, der vorrangig in mobilitätsunterstützenden Vorrichtungen eingesetzt werden soll. Mehrere dieser Aktuatoren können in einer Vorrichtung gemeinsam verwendet und entsprechend angesteuert werden. Bevorzugt wird ein verstärkter Aktuator eingesetzt, der sechs kinematische Beine verwendet, die in Kombination eine ausgewählte Position der oberen beweglichen Platte innerhalb von sechs Freiheitsgraden relativ zur Grundplatte ansteuern. Die Beine sind entsprechend schwenkbar an der Platte und der Grundplatte befestigt.

Der Aktuator ist zusätzlich durch einen zentral angeordneten Dämpfer verstärkt. Mittels des Dämpfers kann die Steifigkeit des Aktuators eingestellt werden.

Aus der DE 10 2004 004 313 A1 ist ein weiteres Positioniersystem bekannt. Dort ist u.a. eine Anordnung mit sechs teleskopartig längenverstellbaren Stabelementen und drei zusätzlichen stabförmigen Versteifungselementen beschrieben. Sämtliche Elemente erstrecken sich von einem Basiselement zu einem Arbeitselement. Des Weiteren ist erläutert, dass die Versteifung bzw. Aussteifung hauptsächlich in der Arbeitsstellung erreicht werden soll, während die Versteifungs- bzw. Aussteifungswirkung in den Übergangsstellungen zwischen der Ausgangsstellung und der Arbeitsstellung vermindert ist. Wie diese Aussteifung im Detail erfolgt, ist nicht näher beschrieben. Generell wird jedoch ausgesagt, dass die Versteifungselemente steuer- oder regelbar in ihrer Länge verstellt werden können. Die Betätigung kann hydraulisch, pneumatisch, mechanisch oder elektrisch erfolgen. Alternativ oder zusätzlich sind zu Versteifungselementen auch Vorspannelemente genannt.

Die DE 10 2006 011 823 A1 befasst sich mit einer Positionier-Einrichtung mit einer Basisplatte und einer Werkzeugplatte, die mittels sechs Streben miteinander verbunden sind. Die Streben sind jeweils zu Strebenpaaren zusammengefasst, wobei jeweils ein Strebenpaar zumindest an der Basisplatte eine gemeinsame Anlenkung, einen gemeinsamen Antrieb und ebenfalls einen gemeinsamen Bremsmechanismus aufweisen kann.

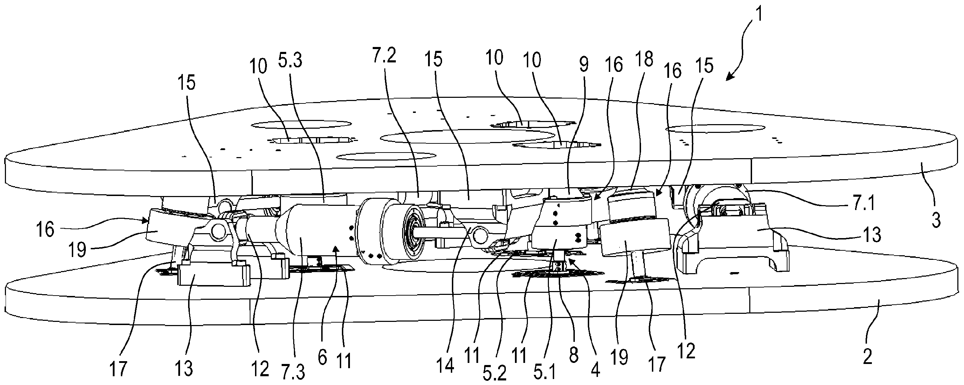

Die DE 102 55 950 A1 befasst sich mit einem Roboterantrieb, der zwei, für die jeweilige Aufgabe spezialisierte Teilantriebe aufweist. Es handelt sich hierbei um einen Teilantrieb für die Krafterzeugung und einen Teilantrieb für die Positioniererzeugung. Im konkreten Fall (siehe Figuren 1 und 2) wird ein Roboterarm mit einem Kraftantrieb versehen, der aus einem Elektromotor mit Getriebe und einem offenen Zahnriemen besteht. Der Zahnriemen ist über Zugfedern vorgespannt. Zusätzlich ist ein Positionier-Antrieb vorgesehen, der aus einem konventionellen DC-Mikromotor mit einem Winkelgeber und einem hochuntersetzenden Getriebe besteht. Eine Kupplung sorgt für die entsprechende Kopplung zwischen den zwei Teilantrieben. Es ist auch eine Feststellbremse, z. B. piezoelektrisch betätigte Bremse, angesprochen, die dem Positionier-Antrieb zugeordnet ist.

Die CN 107538231 A1 befasst sich mit einer Mehrachsen-Positionier-Vorrichtung, die eine untere Plattform, eine obere Plattform, sechs schräg angeordnete Aktoren und im Zentrum angeordnete Tragsäulen aufweist. Die Last wird hauptsächlich durch die Tragsäulen aufgenommen. Die Tragsäulen umfassen eine lineare Führung, an deren oberen Ende eine mit der oberen Plattform verbundene Gelenkeinrichtung angeordnet ist. Das Linearlager ist mittels einer Druckfeder an einer Basis abgestützt. Die Basis ist auf der unteren Plattform angeordnet und befestigt, während sich der obere Teil der Tragsäule relativ zur unteren Plattform frei bewegen kann. Die sechs Aktuatoren sorgen für die präzise Ansteuerung.

Es ist daher die Aufgabe der vorliegenden Erfindung, ein 6-Achs-Positioniersystem der eingangs genannten Art bereitzustellen, das eine vereinfachte Arretierung, insbesondere in der Sollposition auch bei erhöhten Lasten mit hoher Präzision bereitstellt.

Diese Aufgabe wird durch ein 6-Achs-Positioniersystem mit den Merkmalen gemäß Anspruch 1 gelöst. Vorteilhafte Ausgestaltungen sind in den Unteransprüchen beschrieben.

Bei einem gattungsgemäßen 6-Achs-Positioniersystem sind hierzu die sechs Aktoren in zwei Gruppen unterteilt sind, wobei die Aktoren der ersten Gruppe innerhalb eines von den Aktoren der zweiten Gruppe umgrenzten Bereichs auf der Basis und an der bewegbaren Einheit angeordnet sind und wobei die mindestens eine zusätzliche Komponente an der Basis und an der bewegbaren Einheit weiter außen relativ zur ersten Gruppe der Aktoren, bevorzugt im Bereich zwischen den Aktoren der ersten und den Aktoren der zweiten Gruppe, angeordnet ist.. Die zusätzliche Komponente ist derart ausgestaltet, dass mittels dieser eine lösbare Arretierung des 6-Achs-Positioniersystems zumindest in bestimmten Positionen der bewegbaren Einheit möglich ist. Unter zusätzlicher längenveränderlicher Komponente ist ein Element, eine Baugruppe etc. zusätzlich zu den sechs Aktoren gemeint. Demnach handelt es sich bei der mindestens einen zusätzlichen längenveränderlichen Komponente um etwas, das ergänzend (zusätzlich) zu eventuell an den sechs Aktoren vorhandenen Arretierungen bzw. Bremsen an 6-Achs-Positioniersystemen vorhanden sein muss. Eine zusätzliche Komponente bietet auch den Vorteil, dass diese an anderer Stelle als die Aktoren platziert werden kann, so dass aufgrund der Gruppierung, Entfernung vom Zentrum etc. der mindestens einen zusätzlichen Komponente erheblicher Einfluss auf die durch die Arretierung bewirkte Versteifung des Gesamtsystems genommen werden kann. Eine solche Ausgestaltung eignet sich daher auch insbesondere für Schwerlast-6-Achs-Positioniersysteme, weil dort in aller Regel großbauende Schwerlast-Aktoren verwendet werden müssen. Hierdurch ergibt sich u.a. der Vorteil, dass mittels zusätzlicher einfacher Maßnahmen die Einhaltung der Sollposition aufgrund einer höheren Steifigkeit mit kostengünstigeren Mitteln erzielt werden kann. Die zusätzliche Komponente nimmt nicht aktiv an der Positionierung der bewegbaren Einheit teil, sondern sorgt entsprechend für eine Arretierung in der vorbestimmten Sollposition mittels der Feststellbremse.

Hierdurch verhalten sich die zusätzlichen Komponenten beim Verfahren der bewegbaren Einheit passiv, weil diese mittels der Aktoren mitgeschleppt bzw. mitbewegt werden. Die längenveränderliche zusätzliche Komponente weist demnach keinen eigenen Antrieb auf, wodurch Kosten reduziert sind. Das Vorsehen einer Feststellbremse in rein passiv ausgebildeten, längenveränderlichen zusätzlichen Komponenten hat darüber hinaus den Vorteil, dass die Präzision des gesamten 6-Achs-Positioniersystems stark verbessert ist. Eine Wärmeentwicklung aufgrund der Feststellbremse(n) wirkt sich nicht negativ auf den Antrieb durch die sechs längenveränderlichen Aktoren aus, wodurch die sehr hohe Präzision erzielbar ist. Die Feststellbremsen können demnach von den Antrieben in den sechs Aktoren weitgehend wärmetechnisch entkoppelt werden. Wärmeausdehnungen haben daher weniger Einfluss auf die Positioniergenauigkeit. Bevorzugt sind die Aktoren unterschiedlicher Gruppen auch unterschiedlich ausgestaltet. Hierdurch lässt sich die bewegbare Einheit mit erweitertem Arbeitsraum um die an der bewegbaren Einheit angebrachten Enden der Aktoren der ersten Gruppe bewegen. Hierdurch besteht die Möglichkeit, diese drei Aktoren der ersten Gruppe gegenüber den drei Aktoren der zweiten Gruppe kürzer auszubilden und gegebenenfalls mit mehr Hubkraft auszustatten. Eine Art Arbeitsaufteilung zwischen den Aktoren der ersten Gruppe und der zweiten Gruppe ist somit möglich, was insgesamt zu einer kompakteren, insbesondere flacheren, Bauweise mit erweitertem Arbeitsraum führt. Zusätzlich unterstützen die zusätzlichen Komponenten die Versteifung bei eingenommener gewünschter Sollposition. Insbesondere werden Kippkräfte, die außerhalb des von den drei Aktoren der ersten Gruppe unterstützten Bereichs eingeleitet werden, zusätzlich von der mindestens einen Komponente unterstützt. Trotz der aufgrund der Anordnung der Aktoren der ersten Gruppe erreichten größeren Verschwenkbarkeit, wird dennoch eine stabile Positionierung erzielt.

Günstigerweise ist die zusätzliche Komponente derart ausgestaltet, dass eine lösbare Arretierung des 6-Achs-Positioniersystems im gesamten Arbeitsraum des 6-Achs-Positioniersystems möglich ist. Die mindestens eine zusätzliche Komponente ist somit in der Lage, die Bewegungen der bewegbaren Einheit im Arbeitsraum mitmachen zu können und dann in der gewünschten Soll-Position zu arretieren. Die Vorteile werden demnach im gesamten Arbeitsraum bereitgestellt.

Gemäß einer Ausführungsform ist die lösbare Feststellbremse eine Piezobremse. Diese lässt sich sehr exakt ansteuern, so dass es durch den Bremsvorgang an sich nicht zur Beeinflussung der Sollposition kommt.

Gemäß einer weiteren Ausgestaltung kann die lösbare Feststellbremse eine Saugluftbremse (Vakuumbremse) sein. Diese ist sehr kostengünstig mit geringem Aufwand zur Verfügung zu stellen.

Insbesondere aus Symmetriegründen ist es von Vorteil, wenn gemäß einer Ausführungsform mindestens zwei, bevorzugt drei zusätzliche längenveränderliche Komponenten zur Arretierung des 6-Achs-Positioniersystems vorgesehen sind. Günstig ist dabei insbesondere die Variante, bei der jeweils zwei Aktoren jeweils eine zusätzliche Komponente zugeordnet wird. Durch eine gleichmäßige Verteilung lässt sich auch eine gleichmäßige Versteifung im jeweiligen Arbeitsraum erzielen.

Entsprechend kann die zusätzliche Komponente derart ausgestaltet sein, dass diese im arretierten Zustand die Steifigkeit und die Eigenfrequenz des 6-Achs-Positioniersystems erhöht. Dies ist insbesondere für Schwerlast-6-Achs-Positioniersysteme von besonderem Vorteil, weil auch hohe Lasten sehr positionstreu mittels eines günstigeren 6-Achs-Positioniersystems angeordnet werden können.

Insbesondere bei Schwerlast-6-Achs-Positioniersystemen wirken in aller Regel in Vertikalrichtung sehr hohe Kräfte. Deshalb ist es von Vorteil, wenn die zusätzliche Komponente derart längenveränderlich und mit der Basis und der bewegbaren Einheit schwenkbar verbunden ist, dass die zusätzliche Komponente in einem Winkelbereich von maximal ± 45°, bevorzugt maximal ± 30°, zu einer Vertikalen bzw. einer Senkrechten zu einer von der Basis aufgespannten Ebene bewegbar angeordnet ist. Die Basis und auch die bewegbare Einheit sind in einer Grundstellung in aller Regel waagerecht bzw. horizontal angeordnet, so dass sich der Winkelbezug zu einer Vertikalen ergibt. Prinzipiell können aber 6-Achs-Positioniersysteme an sich unterschiedliche Winkellagen einnehmen, d.h. z.B. die Basis aus der Waagerechten bzw. Horizontalen herausgekippt werden, weshalb dann ein Bezug zu einer Senkrechten vorteilhaft ist. Eine von der Basis aufgespannte Ebene ist z.B. durch eine die Mittelpunkte der Verbindungsstellen der zusätzlichen Komponenten oder der Verbindungsstellen der Aktoren enthaltenen Ebene vorgegeben. Derart angeordnete zusätzliche Komponenten wirken insbesondere hinsichtlich einer vorrangig vertikal eingeleiteten Kraft versteifend entgegen.

Bevorzugt sind die Aktoren unterschiedlicher Gruppen auch unterschiedlich Hierdurch werden insbesondere Kippkräfte, die außerhalb des von den drei Aktoren der ersten Gruppe unterstützten Bereichs eingeleitet werden, zusätzlich von der mindestens einen Komponente unterstützt. Trotz der aufgrund der Anordnung der Aktoren der ersten Gruppe erreichten größeren Verschwenkbarkeit, wird dennoch eine stabile Positionierung erzielt.

Bei einer weiteren Ausgestaltung ist vorgesehen, dass die Aktoren der ersten Gruppe derart längenveränderlich und mit der Basis und der bewegbaren Einheit schwenkbar verbunden sind, dass die drei Aktoren der ersten Gruppe jeweils in einem Winkelbereich von maximal ± 30°, bevorzugt maximal ± 15°, zu einer Vertikalen bzw. Senkrechten zu einer von der Basis aufgespannten Ebene bewegbar angeordnet sind, und dass die drei Aktoren der zweiten Gruppe derart längenveränderlich und mit der Basis und der bewegbaren Einheit schwenkbar verbunden sind, dass die drei Aktoren der zweiten Gruppe jeweils in einem Winkelbereich von ≥ 0° bis maximal 45°, bevorzugt ≥ 0° bis maximal 30°, zu einer Horizontalen bzw. Parallelen zu einer von der Basis aufgespannten Ebene bewegbar angeordnet sind. Durch diese Anordnung kann ein Hauptteil der Last von den drei Aktoren der ersten Gruppe aufgenommen werden, während die drei Aktoren der zweiten Gruppe vorrangig der Positionierung dienen. Bei entsprechender Längenveränderung der Aktoren verschieben sich dann die Verhältnisse, wobei die Haupthublast immer noch von den drei Aktoren der ersten Gruppe getragen wird. Die mindestens eine zusätzliche Komponente stabilisiert dann in der jeweiligen Sollposition. Die drei Aktoren der zweiten Gruppe sind aufgrund der Winkelvorgabe in aller Regel wesentlich flacher angeordnet, als die drei Aktoren der ersten Gruppe.

Im Extremfall können daher die drei Aktoren der zweiten Gruppe in der minimalen Hubposition flach bzw. waagerecht liegen und bei der maximalen Hubposition im spitzen Winkel angestellt sein. Insgesamt führt dies zu einer sehr flachen und kompakten Konstruktion. Bei einer solchen Anordnung benötigen die drei Aktoren der zweiten Gruppe einen höheren Stellweg. Das ist nur möglich, wenn diese drei Aktoren seitlich an den drei Aktoren der ersten Gruppe vorbeigeführt werden. Es kann auch ein Vorbeiführen an der mindestens einen zusätzlichen Komponente stattfinden, oder es verbleibt Raum zwischen den drei Aktoren der zweiten Gruppe, für die Platzierung der mindestens einen zusätzlichen Komponente.

Bevorzugt können die drei Aktoren der ersten Gruppe als Schwerlastaktoren ausgestaltet sein, die laststärker sind als die drei Aktoren der zweiten Gruppe. Obwohl auch auf Standard- und auch auf Gleichteile zurückgegriffen werden kann, ist es bevorzugt, wenn die drei Aktoren der ersten Gruppe und die drei Aktoren der zweiten Gruppe unterschiedlich ausgestaltet sind. Es besteht die Möglichkeit, dass die drei Aktoren der ersten Gruppe mindestens doppelt und weiter bevorzugt mindestens dreimal so laststark sind wie die Aktoren der zweiten Gruppe.

Des Weiteren bezieht sich die Erfindung auf ein Verfahren zum Bereitstellen eines 6-Achs-Positioniersystems mit einer Basis und einer bewegbaren Einheit und sechs längenveränderlichen Aktoren, deren eines Ende mit der Basis und deren jeweils anderes Ende mit der bewegbaren Einheit verbunden ist, wobei das Verfahren folgende Schritte umfasst:
Verfahren der bewegbaren Einheit mittels eines Zusammenspiels der sechs längenveränderlichen Aktoren relativ zur Basis zu einer vorgegebenen Zielposition, und

Arretieren des 6-Achs-Positioniersystems zum Erhöhen der Steifigkeit und der Eigenfrequenz des 6-Achs-Positioniersystems in der Zielposition mittels mindestens einer zusätzlich zu den Aktoren zwischen der Basis und der bewegbaren Einheit längenveränderlich angeordneten zusätzlichen Komponente.

Die sechs Aktoren müssen demnach nicht selbst derart steif ausgestaltet werden, dass sie in der vorgegebenen Zielposition die notwendige Steifigkeit und Eigenfrequenz des Systems bereitstellen, sondern die Aktoren können im Hinblick auf die verwendete mindestens eine zusätzliche Komponente entsprechend angepasst werden, weil eine Erhöhung der Steifigkeit und der Eigenfrequenz in der Zielposition mittels der mindestens einen zusätzlichen Komponente stattfindet. Die aufwändiger konstruierten Aktoren können daher kostengünstiger ausfallen oder in eher unüblicheren Gruppierungen verwendet werden, ohne auf eine notwendige Steifigkeit und Eigenfrequenz in der Zielposition im Arbeitsraum zu verzichten.

Bevorzugt kann die zusätzliche Komponente beim Verfahren der bewegbaren Einheit mittels des Zusammenspiels der sechs längenveränderlichen Aktoren passiv mitbewegt werden. Es erfolgt demnach ein Mitschleppen bzw. Teleskopieren ohne nennenswerten Widerstand oder Unterstützung, weil die Bewegung der bewegbaren Einheit den sechs längenveränderlichen Aktoren vorbehalten ist. Dennoch besteht zusätzlich die Möglichkeit, dass die mindestens eine bewegbare Einheit eine Dämpfung bereitstellt. Die Hauptaufgabe der bewegbaren Einheit besteht aber in der Arretierung in der Zielposition und der Erhöhung der Steifigkeit und Eigenfrequenz des Systems.

Im Folgenden wird ein Ausführungsbeispiel der vorliegenden Erfindung anhand einer Zeichnung näher erläutert. Die einzige Figur zeigt eine perspektivische Darstellung eines Ausführungsbeispiels eines erfindungsgemäßen 6-Achs-Positioniersystems.

Die in der Figur dargestellte erste Ausführungsform eines 6-Achs-Positioniersystems 1 weist eine Basis 2 als dreiecksförmige Plattform und eine ebenfalls als dreiecksförmige Plattform ausgestaltete bewegbare Einheit 3 sowie dazwischen angeordnete, noch näher zu bezeichnende Aktoren auf. Sowohl die Basis 2 als auch die bewegbare Einheit 3 sind jeweils von einer Platte von im Wesentlichen gleichmäßiger Dicke, bevorzugt aus einem Metall, z.B. Stahl, gebildet. Die zwischen der Basis 2 und der bewegbaren Einheit 3 angeordneten Aktoren sind zu einer ersten Gruppe 4 mit den Aktoren 5.1, 5.2 und 5.3 und einer zweiten Gruppe 6 mit den Aktoren 7.1, 7.2 und 7.3 gruppiert. Die Aktoren 5.1, 5.2 und 5.3 unterscheiden sich in Funktion und Aufbau von den Aktoren 7.1, 7.2 und 7.3, während die Aktoren einer jeweiligen Gruppe 4 oder 6 gleich aufgebaut sind. Die Aktoren 5.1, 5.2 und 5.3 der ersten Gruppe 4 sind mit ihrem unteren Ende 8 an der Basis 2 und mit ihren oberen Enden 9 an der bewegbaren Einheit 3 schwenkbar angeordnet. Die schwenkbare Anordnung erfolgt z.B. nach Art eines Kreuzgelenks (Kardangelenk), so dass Schwenkbewegungen um zwei Achsen möglich sind. Zur kompakteren Anordnung weist die Basis 2 jeweils eine Fensteraussparung 10 zur Anbringung des unteren Endes 8 der Aktoren 5.1, 5.2 und 5.3 auf, so dass eine Achse des Kreuzgelenks innerhalb der Fensteraussparung 10 angebracht ist. In gleicher Weise ist die bewegbare Einheit 3 mit drei Fensteraussparungen 11 versehen, die zur schwenkbaren Anordnung der oberen Enden 9 der Aktoren 5.1, 5.2 und 5.3 dienen. Wiederum ist eine Achse des zugehörigen Kreuzgelenks in der Fensteraussparung 11 befestigt.

Ein unteres Ende der Aktoren 7.1, 7.2 und 7.3 ist schwenkbar an jeweils einem auf der Basis 2 angeordneten Lagerblock 13 angeordnet. Zur schwenkbaren Anordnung wird wiederum bevorzugt ein Kreuzgelenk für die Verschwenkung um zwei Achsen verwendet. In gleicher Weise erfolgt die Anordnung eines oberen Endes 14 der Aktoren 7.1, 7.2 und 7.3 mittels eines Lagerblocks 15, der an der bewegbaren Einheit 3 angebracht ist. Auch am oberen Ende 14 erfolgt die schwenkbare Anordnung bevorzugt mittels eines Kreuzgelenks zur Verschwenkung um zwei Achsen.

Aufgrund der gewählten Anordnung sind die Aktoren 5.1, 5.2 und 5.3 der ersten Gruppe 4 aufrechtstehender angeordnet als die Aktoren 7.1, 7.2 und 7.3 der zweiten Gruppe 6. Hilfreich für eine solche Anordnung sind auch die Fensteraussparungen 10 und 11 sowie die beiden Lagerblöcke 13 und 15. Die Fensteraussparungen 10 und 11 sind jeweils im Vergleich zu den zugehörigen Lagerblöcken 13 bzw. 15 weiter innenliegend an der Basis 2 bzw. der bewegbaren Einheit 3 platziert. Hierdurch sind die Aktoren 5.1, 5.2, 5.3 der ersten Gruppe 4 innerhalb eines von den Aktoren 7.1, 7.2, 7.3 der zweiten Gruppe 6 umgrenzten Bereichs auf der Basis 2 bzw. der bewegbaren Einheit 3 angeordnet. Nachdem der Lasteintrag von oben über die bewegbare Einheit 3 erfolgt, ist es auch möglich, dass die Hauptlast von den Aktoren 5.1, 5.2, 5.3 aufgenommen wird. Diese sind deshalb als Schwerlastaktoren ausgestaltet, die wesentlich laststärker sind als die drei Aktoren 7.1, 7.2, 7.3 der zweiten Gruppe 6. Alle 6 Aktoren sind längenverstellbar (teleskopierbar) und werden mittels eines bürstenlosen DC-Motors angetrieben. Die prinzipielle Funktionsweise und Ansteuerung von 6-Achs-Positioniersystemen sind an sich bekannt, weshalb hier nicht näher darauf eingegangen wird. Auf jeden Fall lässt sich die bewegbare Einheit 3 relativ zur Basis 2 sowohl anheben, senken oder verschieben und um alle drei Raumachsen kippen. Die Verstellbarkeit der Aktoren 5.1, 5.2, 5.3 und 7.1, 7.2 und 7.3 sowie die Anordnung gibt dabei den möglichen Arbeitsraum vor. Aufgrund der verwendeten Antriebstechnik sind sehr präzise Ansteuerungen und Positionierungen auch im vorliegenden Schwerlastbereich möglich.

Ergänzend zu den Aktoren 5.1, 5.2, 5.3 und 7.1, 7.2, 7.3 sind drei zusätzliche längenveränderliche Komponenten 16 in Form von teleskopierbaren Einheiten vorgesehen. Die Komponenten 16 sind wie auch die Aktoren 5.1, 5.2, 5.3 und 7.1, 7.2 und 7.3 gleichmäßig bzw. symmetrisch sowohl an der Basis 2 als auch an der bewegbaren Einheit 3 angeordnet. Das untere Ende 17 der Komponenten 16 ist schwenkbeweglich an der Basis 2 und das obere Ende 18 ist schwenkbeweglich an der bewegbaren Einheit 3 angeordnet. Dies geschieht in ähnlicher Weise wie bei den Aktoren 5.1, 5.2, 5.3 der ersten Gruppe 4 z.B. nach Art eines Kreuzgelenks (Kardangelenk), so dass die Schwenkbewegungen um zwei Achsen möglich sind. Die zusätzlichen Komponenten 16 sind mit einer Feststellbremse 19 (z.B. eine Piezobremse oder eine Vakuumbremse) versehen, mittels derer diese jederzeit arretiert oder entriegelt sein können. Ansonsten sind die zusätzlichen Komponenten 16 bei geöffneter Feststellbremse 19 frei längenveränderbar ohne nennenswerten Widerstand, wobei die Längenveränderung passiv aufgrund der Betätigung durch die Aktoren 5.1, 5.2, 5.3 sowie 7.1, 7.2, 7.3 erfolgt.

In der in der Figur dargestellten Grundstellung des 6-Achs-Positioniersystems 1, in der die Basis 2 und die bewegbare Einheit 3 parallel zueinander ausgerichtet sind, d.h. die Aktoren 5.1, 5.2 und 5.3 der ersten Gruppe 4 weisen die gleiche Länge auf und die Aktoren 7.1, 7.2 und 7.3 der zweiten Gruppe 6 weisen die gleiche Länge auf. Des Weiteren befinden sich die Aktoren 5.1, 5.2 und 5.3 in ihrer vollständig eingefahrenen Stellung, weshalb auch die Aktoren 7.1, 7.2 und 7.3 ihre möglichst weit nach unten geschwenkte Stellung einnehmen. In dieser Grundstellung sind die Aktoren 5.1, 5.2 und 5.3 mit ihren Hauptachsen exakt vertikal ausgerichtet, d.h. sie stehen senkrecht auf einer von der Basis 2 aufgespannten Ebene. Die Aktoren 7.1, 7.2 und 7.3 weisen in dieser Stellung etwa einen Winkel zur Horizontalen bzw. einer Parallelen zu einer von der Basis 2 aufgespannten Ebene von 0° auf.

Die zusätzlichen längenveränderlichen Komponenten 16 sind in dieser Stellung leicht aus der Vertikalen herausgekippt und mit ihren oberen Enden 18 näher an den oberen Enden 9 des jeweils nächsten Aktors 5.1, 5.2, 5.3 der ersten Gruppe 4 angeordnet als die unteren Enden 17 zu den unteren Enden 8 des jeweiligen nächstliegenden Aktors 5.1, 5.2 und 5.3 der ersten Gruppe 4 angeordnet. Der Neigungswinkel zur Vertikalen beträgt ca. 10°. Darüber hinaus sind die zusätzlichen Komponenten 16 weiter außerhalb sowohl an der Basis 2 als auch an der bewegbaren Einheit 3 im Vergleich zu den Aktoren 5.1, 5.2 und 5.3 der ersten Gruppe 4 platziert. Jedem dieser Aktoren 5.1, 5.2, 5.3 ist jedoch ein nebenstehender Partner (Komponente 16) zugeordnet. Die Platzierung erfolgt in etwa im Zwischenraum zwischen zwei Aktoren 7.1, 7.2, 7.3 der zweiten Gruppe 6. Werden die Achsen der Aktoren 7.1, 7.2 und 7.3 der zweiten Gruppe 6 so verlängert, dass sie ein Dreieck erzeugen, so sind die Aktoren 5.1, 5.2, 5.3 der ersten Gruppe 4 und auch die zusätzlichen Komponenten 16 innerhalb dieses Dreiecks angeordnet. Hierdurch ergibt sich eine kompakte Gruppierung, d.h. die u.a. dafür sorgt, dass bereits bei geringem Hub der Aktoren 5.1, 5.2 und 5.3 eine relativ große Verschwenkung stattfinden kann. Dennoch ist im Zusammenspiel der Aktoren 5.1, 5.2 und 5.3 sowie 7.1, 7.2 und 7.3 eine exakte Positionierung möglich.

In der in der Figur dargestellten vollständig eingefahrenen Stellung der Aktoren 5.1, 5.2 und 5.3 sind die Aktoren 7.1, 7.2 und 7.3 der zweiten Gruppe 6 wesentlich länger als die Aktoren 5.1, 5.2 und 5.3 der ersten Gruppe 4. Entsprechend ist der maximale Verstellweg eines Aktors 7.1, 7.2 und 7.3 der zweiten Gruppe 6 wesentlich größer als der maximale Verstellweg eines Aktors 5.1, 5.2 und 5.3 der ersten Gruppe 4.

Die zusätzlichen Komponenten 16 sind so ausgestaltet, dass diese bei Einnahme einer angesteuerten Zielposition der bewegbaren Einheit 3 durch die Aktoren 5.1, 5.2, 5.3 der ersten Gruppe 4 und 7.1, 7.2 und 7.3 der zweiten Gruppe 6 die Feststellbremse 19 aktivieren und somit das gesamte 6-Achs-Positioniersystem 1 arretierend versteifen. Hierdurch wird die Gesamtsteifigkeit des Systems 1 und dessen Eigenfrequenz erhöht, so dass auch im Schwerlastbetrieb eine sehr genaue und steife Positionierung vorgenommen werden kann.

Im Folgenden wird die Wirkungs- und Funktionsweise des gezeigten Ausführungsbeispiels näher erläutert.

Durch die gezielte Ansteuerung der Antriebe der Aktoren 5.1, 5.2 und 5.3 sowie 7.1, 7.2 und 7.3 erfolgt eine zielgerichtete Positionierung der bewegbaren Einheit 3 relativ zur Basis 2. Eine gewünschte 6-Achs-Positionierung innerhalb eines vorgegebenen Arbeitsraums ist möglich. Die Hauptlast wird beim Anheben und Absenken durch die Aktoren 5.1, 5.2 und 5.3 der ersten Gruppe 4 getragen. Diese sind deshalb als entsprechende Schwerlastaktoren ausgestaltet, so dass erhebliche Lasten bewegt werden können. Die Aktoren 5.1, 5.2 und 5.3 der ersten Gruppe 4 schwenken dabei lediglich um einen begrenzten Winkelbereich bezüglich einer Vertikalen bzw. Senkrechten zu einer von der Basis 2 aufgespannten Ebene (maximal ± 30°, bevorzugt maximal ± 15°). Die Aktoren 7.1, 7.2 und 7.3 verschwenken daran angepasst ebenfalls nur um einen begrenzten Winkelbereich (von ≥ 0° bis maximal 45°) zu einer Horizontalen bzw. Parallelen zu einer von Basis 2 aufgespannten Ebene.

Zum Beispiel kann durch Verkürzung oder Teleskopierung der Aktoren 7.1, 7.2 und 7.3 der zweiten Gruppe 6 und entsprechendem Schwenkausgleich und Verlängerung der Aktoren 5.1, 5.2 und 5.3 der ersten Gruppe 4 die bewegbare Einheit 3 gegenüber der Basis 2 gedreht werden, auch ohne dass notwendigerweise der Abstand verändert werden muss. Insgesamt ist der benötigte Stellweg der Aktoren 7.1, 7.2 und 7.3 größer als der der Aktoren 5.1, 5.2 und 5.3.

Die längenveränderlichen zusätzlichen Komponenten 16 werden bei diesen Positioniervorgängen passiv mitbewegt. Dies erfolgt durch Zusammenschieben oder Teleskopieren, je nach Bewegungsrichtung. Sobald die gewünschte Zielposition mittels der Aktoren 5.1, 5.2, 5.3 der ersten Gruppe 4 und 7.1, 7.2, 7.3 der zweiten Gruppe 6 eingenommen wurde, erfolgt das Festsetzen der Feststellbremse 19 und eine Arretierung des 6-Achs-Positioniersystems 1 in der Zielposition. Die Komponenten 16 sind so ausgestaltet, dass sie in der Zielposition die Steifigkeit und Eigenfrequenz des 6-Achs-Positioniersystems 1 erheblich vergrößern. Dies ist insbesondere notwendig, weil bei der dargestellten Ausführungsform die Aktoren 5.1, 5.2 und 5.3 der ersten Gruppe 4 mehr ins Zentrum gerückt sind und daher Bewegungen der bewegbaren Einheit 3 eventuell weniger steif stattfinden können. Die Komponenten 16 sorgen hier für einen entsprechenden Ausgleich, so dass auch Schwerlastsysteme mit großer Präzision und Ansteuerung ihrer Zielposition betrieben werden können. Sobald ein weiteres Verfahren stattfinden soll, wird die Feststellbremse 19 wieder gelöst und die Komponenten 16 passiv mitbewegt. Evtl. Wärmeentwicklung im Bereich der Feststellbremse 19 wirkt sich nicht unmittelbar auf die Antriebe der Aktoren 5.1, 5.2, 5.3 der ersten Gruppe und Aktoren 7.1, 7.2, 7.3 der zweiten Gruppe aus. Hierdurch wird die Präzision verbessert.

Alles in allem entsteht ein 6-Achs-Positioniersystem 1, das kompakt, insbesondere flach aufgebaut ist, und hohe Lasten bei notwendiger Steifigkeit tragen kann. Dies wird durch die entsprechende Gruppierung und Funktionsaufteilung der beiden Aktorengruppen 4,6 und der Zuhilfenahme der arretierbaren Komponenten 16 erreicht. Ergänzend sei noch angemerkt, dass in der Figur aus Übersichtlichkeitsgründen auf die Darstellung der elektrischen Anschlüsse und etwaige andere Anschlüsse sowie auf die Darstellung der Sensorik verzichtet wurde. Die Ansteuerung und Regelung des dargestellten 6-Achs-Positioniersystems 1 erfolgt entsprechend bestens bekannter Vorgehensweisen bei bekannten derartigen Systemen (Hexapoden).

### Bezugszeichenliste

- 1: 6-Achs-Positioniersystem
- 2: Basis
- 3: bewegbare Einheit
- 4: 1. Gruppe
- 5.1, 5.2, 5.3: Aktor
- 6: 2. Gruppe
- 7.1,7.2,7.3: Aktor
- 8: unteres Ende
- 9: oberes Ende
- 10: Fensteraussparung
- 11: Fensteraussparung
- 12: unteres Ende
- 13: Lagerblock
- 14: oberes Ende
- 15: Lagerblock
- 16: Komponente
- 17: unteres Ende
- 18: oberes Ende
- 19: Feststellbremse

## Patentansprüche

1. 6-Achs-Positioniersystem (1) mit einer Basis (2) und einer bewegbaren Einheit (3) und sechs längenveränderlichen Aktoren (5.1, 5.2, 5.3; 7.1, 7.2, 7.3), deren eines Ende (8, 12) mit der Basis (2) und deren jeweils anderes Ende (9, 14) mit der bewegbaren Einheit (3) verbunden ist, wobei mindestens eine zusätzliche längenveränderliche Komponente (16) vorgesehen ist, deren eines Ende (17) mit der Basis (2) und deren anderes Ende (18) mit der bewegbaren Einheit (3) verbunden ist und die zusätzliche Komponente (16) derart ausgestaltet ist, dass mittels dieser eine lösbare Arretierung des 6-Achs-Positioniersystems (1) zumindest in bestimmten Positionen der bewegbaren Einheit (3) möglich ist, wobei die zusätzliche Komponente (16) eine lösbare Feststellbremse (19) aufweist und wobei die zusätzliche Komponente (16) derart ausgestaltet ist, dass diese passiv mittels der Bewegung der sechs angetriebenen Aktoren (5.1,5.2,5.3; 7.1,7.2,7.3) längenveränderbar ist, **dadurch gekennzeichnet, dass** die sechs Aktoren (5.1,5.2,5.3; 7.1,7.2,7.3) in zwei Gruppen (4,6) unterteilt sind, und dass die Aktoren (5.1,5.2,5.3) der ersten Gruppe (4) innerhalb eines von den Aktoren (7.1,7.2,7.3) der zweiten Gruppe (6) umgrenzten Bereichs auf der Basis (2) und an der bewegbaren Einheit (3) angeordnet sind und dass die mindestens eine zusätzliche Komponente (16) an der Basis (2) und an der bewegbaren Einheit (3) weiter außen relativ zur ersten Gruppe (4) der Aktoren (5.1,5.2,5.3), bevorzugt im Bereich zwischen den Aktoren (5.1,5.2,5.3; 7.1,7.2,7.3) der ersten Gruppe (4) und den Aktoren (7.1,7.2,7.3) der zweiten Gruppe (6), angeordnet ist.

2. 6-Achs-Positioniersystem (1) nach Anspruch 1, **dadurch gekennzeichnet, dass** die zusätzliche Komponente (16) derart ausgestaltet ist, dass eine lösbare Arretierung des 6-Achs-Positioniersystems im gesamten Arbeitsraum des 6-Achs-Positioniersystems (1) möglich ist.

3. 6-Achs-Positioniersystem (1) nach Anspruch 1 oder 2, **dadurch gekennzeichnet, dass** die lösbare Feststellbremse (19) eine Piezobremse ist.

4. 6-Achs-Positioniersystem (1) nach Anspruch 1 oder 2, **dadurch gekennzeichnet, dass** die lösbare Feststellbremse (19) eine Saugluftbremse (Vakuumbremse) ist.

5. 6-Achs-Positioniersystem (1) nach einem der Ansprüche 1 bis 4, **dadurch gekennzeichnet, dass** mindestens zwei, bevorzugt drei zusätzliche Komponenten (16) zur Arretierung des 6-Achs-Positioniersystems (1) vorgesehen sind.

6. 6-Achs-Positioniersystem (1) nach Anspruch 5, **dadurch gekennzeichnet, dass** die zusätzliche Komponente (16) derart ausgestaltet ist, dass diese im arretierten Zustand die Steifigkeit und die Eigenfrequenz des 6-Achs-Positioniersystems (1) erhöht.

7. 6-Achs-Positioniersystem (1) nach einem der Ansprüche 1 bis 6, **dadurch gekennzeichnet, dass** die zusätzliche Komponente (16) derart längenveränderlich und mit der Basis (2) und der bewegbaren Einheit (3) schwenkbar verbunden ist, dass die zusätzliche Komponente (16) in einem Winkelbereich von maximal ± 45°, bevorzugt maximal ± 30°, zu einer Vertikalen bzw. einer Senkrechten zu einer von der Basis (2) aufgespannten Ebene bewegbar angeordnet ist.

8. 6-Achs-Positioniersystem (1) nach Anspruch 1, **dadurch gekennzeichnet, dass** die drei Aktoren (5.1,5.2,5.3) der ersten Gruppe (4) derart längenveränderlich und mit der Basis (2) und der bewegbaren Einheit (3) schwenkbar verbunden sind, dass die drei Aktoren (5.1,5.2,5.3) der ersten Gruppe (4) jeweils in einem Winkelbereich von maximal ± 30°, bevorzugt maximal ± 15°, zu einer Vertikalen bzw. Senkrechten zu einer von der Basis (2) aufgespannten Ebene bewegbar angeordnet sind, und dass die drei Aktoren (7.1,7.2,7.3) der zweiten Gruppe (6) derart längenveränderlich und mit der Basis (2) und der bewegbaren Einheit (3) schwenkbar verbunden sind, dass die drei Aktoren (7.1,7.2,7.3) der zweiten Gruppe (6) jeweils in einem Winkelbereich von ≥ 0° bis maximal 45°, bevorzugt ≥ 0° bis maximal 30°, zu einer Horizontalen bzw. Parallelen zu einer von der Basis (2) aufgespannten Ebene bewegbar angeordnet sind.

9. 6-Achs-Positioniersystem (1) nach einem der Ansprüche 1 bis 8, **dadurch gekennzeichnet, dass** die drei Aktoren (5.1,5.2,5.3) der ersten Gruppe (4) als Schwerlastaktoren ausgestaltet sind, die laststärker sind als die drei Aktoren (7.1,7.2,7.3) der zweiten Gruppe (6).

## Claims

1. A 6-axis positioning system (1) comprising a base (2) and a movable unit (3) and six variable-length actuators (5.1, 5.2, 5.3; 7.1, 7.2, 7.3), one end (8, 12) of each actuator being connected to the base (2) and the other end (9, 14) of each actuator being connected to the movable unit (3), wherein at least one additional variable-length component (16) is provided, one end (17) of which is connected to the base (2) and the other end (18) of which is connected to the movable unit (3). The additional component (16) is designed such that the 6-axis positioning system (1) can be releasably locked at least in certain positions of the movable unit (3) by means of the additional component, wherein the additional component (16) has a releasable locking brake (19), and wherein the additional component (16) is designed such that this is passively variable in length by means of the movement of the six driven actuators (5.1, 5.2, 5.3; 7.1, 7.2, 7.3), **characterized in that** the six actuators (5.1, 5.2, 5.3; 7.1, 7.2, 7.3) are divided into two groups (4, 6), and that the actuators (5.1, 5.2, 5.3) of the first group (4) are arranged on the base (2) within a region bounded by the actuators (7.1,7.2,7.3) of the second group (6) and on the movable unit (3), and that the at least one additional component (16) is arranged on the base (2) and on the movable unit (3) further out relative to the first group (4) of actuators (5.1, 5.2, 5.3), preferably in the region between the actuators (5.1, 5.2, 5.3; 7.1, 7.2, 7.3) of the first group (4) and the actuators (7.1, 7.2, 7.3) of the second group (6).

2. The 6-axis positioning system (1) of claim 1, **characterized in that** the additional component (16) is designed such that the 6-axis positioning system can be releasably locked in the entire working space of the 6-axis positioning system (1).

3. The 6-axis positioning system (1) of claim 1 or 2, **characterized in that** the releasable locking brake (19) is a piezo brake.

4. The 6-axis positioning system (1) of claim 1 or 2, **characterized in that** the releasable locking brake (19) is a suction air brake (vacuum brake).

5. The 6-axis positioning system (1) according to one of claims 1 to 4, **characterized in that** at least two, preferably three, additional components (16) are provided for locking the 6-axis positioning system (1).

6. The 6-axis positioning system (1) of claim 5, **characterized in that** the additional component (16) is designed such that it increases the rigidity and the natural frequency of the 6-axis positioning system (1) in the locked state.

7. The 6-axis positioning system (1) according to any one of claims 1 to 6, **characterized in that** the additional component (16) is so length-variable and pivotably connected to the base (2) and the movable unit (3) that the additional component (16) is moveably arranged in an angular range of maximum ± 45°, preferably maximum ± 30°, with respect to a vertical or a perpendicular to a plane (2) spanned by the base.

8. The 6-axis positioning system (1) of claim 1, **characterized in that** the three actuators (5.1, 5.2, 5.3) of the first group (4) are so length-variably and pivotably connected to the base (2) and the movable unit (3) that each of the three actuators (5.1, 5.2, 5.3) of the first group (4) is movably arranged in an angular range of maximum of ± 30°, preferably a maximum of ± 15°, with respect to a vertical or a perpendicular to a plane spanned by the base (2), and that the three actuators (7.1, 7.2, 7.3) of the second group (6) are so length-variably and pivotably connected to the base (2) and the movable unit (3) that each of the three actuators (7.1, 7.2, 7.3) of the second group (6) is movably arranged in an angular range of ≥ 0° to a maximum of 45°, preferably ≥ 0° to a maximum of 30°, with respect to a horizontal or parallel to a plane spanned by the base (2).

9. The 6-axis positioning system (1) according to any one of claims 1 to 8, **characterized in that** the three actuators (5.1, 5.2, 5.3) of the first group (4) are configured as heavy-load actuators, which have a higher load capacity than the three actuators (7.1, 7.2, 7.3) of the second group (6).

## Revendications

1. Système de positionnement à 6 axes (1) comprenant une base (2) et une unité mobile (3) ainsi que six actionneurs à longueur variable (5.1, 5.2, 5.3 ; 7.1, 7.2, 7.3), dont une extrémité (8, 12) est reliée à la base (2) et dont l'autre extrémité respective (9, 14) est reliée à l'unité mobile (3), dans lequel au moins un composant supplémentaire à longueur variable (16) est pourvu, dont une extrémité (17) est reliée à la base (2) et l'autre extrémité (18) est reliée à l'unité mobile (3), et le composant supplémentaire (16) est conçu de telle sorte qu'un verrouillage libérable du système de positionnement à 6 axes (1) est possible, au moins dans des positions déterminées de l'unité mobile (3), dans lequel le composant supplémentaire (16) comporte un frein de stationnement libérable (19), et dans lequel le composant supplémentaire (16) est conçu de telle sorte que sa longueur peut être modifiée passivement au moyen du déplacement des six actionneurs entraînés (5.1, 5.2, 5.3 ; 7.1, 7.2, 7.3), **caractérisé en ce que** les six actionneurs (5.1, 5.2, 5.3 ; 7.1, 7.2, 7.3) sont répartis en deux groupes (4, 6), et **en ce que** les actionneurs (5.1, 5.2, 5.3) du premier groupe (4) sont agencés sur la base (2) et sur l'unité mobile (3) dans une zone délimitée par les actionneurs (7.1, 7.2, 7.3) du deuxième groupe (6), et **en ce qu'**au moins un composant supplémentaire (16) est agencé sur la base (2) et sur l'unité mobile (3) plus à l'extérieur par rapport au premier groupe (4) d'actionneurs (5.1, 5.2, 5.3), de préférence dans la zone située entre les actionneurs (5.1, 5.2, 5.3 ; 7.1, 7.2, 7.3) du premier groupe (4) et les actionneurs (7.1, 7.2, 7.3) du deuxième groupe (6).

2. Système de positionnement à 6 axes (1) selon la revendication 1, **caractérisé en ce que** le composant supplémentaire (16) est conçu de telle sorte qu'un verrouillage libérable du système de positionnement à 6 axes soit possible dans tout l'espace de travail du système de positionnement à 6 axes (1).

3. Système de positionnement à 6 axes (1) selon la revendication 1 ou 2, **caractérisé en ce que** le frein de stationnement libérable (19) est un frein piézoélectrique.

4. Système de positionnement à 6 axes (1) selon la revendication 1 ou 2, **caractérisé en ce que** le frein de stationnement libérable (19) est un frein pneumatique à aspiration (frein à vide).

5. Système de positionnement à 6 axes (1) selon l'une des revendications 1 à 4, **caractérisé en ce qu'**au moins deux, de préférence trois, composants supplémentaires (16) sont pourvus pour verrouiller le système de positionnement à 6 axes (1).

6. Système de positionnement à 6 axes (1) selon la revendication 5, **caractérisé en ce que** le composant supplémentaire (16) est conçu de telle sorte qu'à l'état verrouillé, il augmente la rigidité et la fréquence propre du système de positionnement à 6 axes (1).

7. Système de positionnement à 6 axes (1) selon l'une des revendications 1 à 6, **caractérisé en ce que** le composant supplémentaire (16) est relié de manière pivotante avec une longueur variable à la base (2) et à l'unité mobile (3), de telle sorte que le composant supplémentaire (16) est agencé pour être mobile dans une plage angulaire d'au maximum ±45°, de préférence d'au maximum ±30°, par rapport à un plan vertical ou perpendiculaire à un plan s'étendant sur la base (2).

8. Système de positionnement à 6 axes (1) selon la revendication 1, **caractérisé en ce que** les trois actionneurs (5.1, 5.2, 5.3) du premier groupe (4) sont reliés de manière pivotante avec une longueur variable à la base (2) et à l'unité mobile (3) de telle sorte que les trois actionneurs (5.1, 5.2, 5.3) du premier groupe (4) sont agencés chacun de manière mobile dans une plage angulaire d'au maximum ±30°, de préférence d'au maximum ±15°, par rapport à un plan vertical ou perpendiculaire à un plan s'étendant sur la base (2), et **en ce que** les trois actionneurs (7.1, 7.2, 7.3) du deuxième groupe (6) sont reliés de manière pivotante avec une longueur variable à la base (2) et à l'unité mobile (3) de telle sorte que les trois actionneurs (7.1, 7.2, 7.3) du deuxième groupe (6) sont agencés chacun de manière mobile dans une plage angulaire ≥0° jusqu'à un maximum de 45°, de préférence ≥0° jusqu'à un maximum de 30°, par rapport à un plan horizontal ou parallèle à un plan s'étendant sur la base (2).

9. Système de positionnement à 6 axes (1) selon l'une des revendications 1 à 8, **caractérisé en ce que** les trois actionneurs (5.1, 5.2, 5.3) du premier groupe (4) sont des actionneurs pour charges lourdes, conçus pour une charge supérieure à celle des trois actionneurs (7.1, 7.2, 7.3) du deuxième groupe (6).
